# EUROPEAN PATENT SPECIFICATION

(11) **EP 0 633 404 B1**
(45) Date of publication and mention of the grant of the patent: **01.10.1997**
(21) Application number: 94850121.8
(22) Date of filing: 01.07.1994
(51) Int. Cl.: F16B 5/02, F02B 67/00, F02M 39/00

(54) **Positional error compensating arrangement for fastening auxiliary equipment to an internal combustion engine**
Vorrichtung zur Kompensation eines Lagefehlers eines Antriebsystems auf einer Brennkraftmaschine
Dispositif pour compenser l'erreur de positionnement d'un equipement auxiliaire sur un moteur à combustion interne

(30) Priority: 06.07.1993 SE 9302330
(43) Date of publication of application: 11.01.1995
(73) Proprietor: SCANIA CV AKTIEBOLAG, S-151 87 Södertälje (SE)
(72) Inventor: Strandas, Lars Olov, S-151 47 Södertalje (SE)
(74) Representative: Waldebäck, Hans Olov

(56) References cited:
- EP-A- 0 086 672
- DE-A- 2 150 467
- FR-A- 2 486 174
- FR-E- 70 666
- US-A- 5 141 357
- US-A- 5 161 928

## Description

The invention refers to a positional error compensating fastening arrangement for fastening an auxiliary equipment item to an internal combustion engine. A fastening arrangement of this kind may for example be used for fastening a fuel injection pump to an internal combustion engine used for powering a vehicle.

### State of the art

On internal combustion engines for the powering of vehicles it is often necessary to be able to removably fasten various kinds of auxiliary equipment items or units directly to the engine or to a mounting device firmly attached to the engine. The need to do so applies particularly to equipment items which are driven directly by the engine via some kind of transmission. A typical example of such auxiliary equipment items driven by vehicle engines is the fuel injection pump of a diesel engine. Such an injection pump is usually driven by the engine crankshaft via a chain transmission or gearwheel transmission. In such cases the injection pump is usually flange-mounted in a transmission housing at the forward end of the vehicle's engine, in which case the pump shaft is driven by, for example, a gearwheel which forms part of a gearwheel transmission.

Diesel engines for heavier vehicles are often six-cylinder in-line engines or eight-cylinder vee-engines, which means that the engine's injection pump has six or eight regulating pistons, since each cylinder has its own injector which is supplied with shots of fuel from the injection pump. This results in the injection pump being relatively long, which means that it is not sufficient for only one end of the pump to be fastened to the engine, as is normal practice in, for example, four-cylinder diesel engines. The pump therefore also has to have a fastening at its other end. This is not only because it is desirable to avoid an excessively long unsupported length of injection pump but also because a relatively large power is required to drive an injection pump for six or eight cylinders, which means that large reaction forces have to be absorbed by the pump fastening.

However, fastening the injection pump at both ends involves the disadvantage that the fastening holes in the engine/engine block and the respective mounting holes in the fastening element of the pump have to be very exactly positioned so that the pump can be fitted on or to the engine/engine block without risk of the pump fastening causing oblique stressing of the engine. For production engineering and other reasons, it is in fact not possible at reasonable cost to make these fastening holes/mounting holes with such great positional accuracy as to reliably eliminate the risk of oblique stressing.

The injection pump has therefore to be fastened at one end such that any positional error affecting the fastening holes/mounting holes can be compensated by using a special fastening arrangement suited to the purpose.

Construction technology and machine building technology have developed various types of general fastening devices which employ conical elements which are clamped in holes. However, these general fastening devices are not intended or suitable for fastening, for example, a fuel injection pump to a vehicle engine, nor do they compensate for incorrectly positioned holes in structural elements or machine elements which have to be assembled to one another with a certain degree of accuracy.

FR-E-70666 discloses a fastening arrangement for attaching two elements together which comprises a pair of bushes, the outer one being slit and having an outer ribbed surface, and a fixing screw which can be applied to the inner bush, the outer bush being located in one element and abutting the other. This arrangement is used for attaching a shaft to a broom and the arrangement makes it possible to attach the shaft to brooms having attachment holes with slightly different diameters.

Known technology also includes examples (see for example US A 4 539 964) of position adjustment devices on a fuel injection pump which make it possible for the pump's two-part housing after disassembly (e.g. for change of packings or sealing elements) to be reassembled in exactly the correct mutual position such that the settings of the pump's fuel regulating elements and pump pistons remain unchanged. This avoids the need for renewed calibration of the pump, which is a time-consuming and costly operation because such calibration has to be carried out on a special test rig. Nor are the position adjustment devices used for the purpose suitable for the positional error compensating fastening of an auxiliary equipment item such as a fuel injection pump to a vehicle engine if the length of the equipment item concerned is such that it needs to be provided with fastenings at both ends.

A further feature of the known solutions is that compensation of positional error can only be achieved in one direction and there is therefore no known solution which permits compensation in two or more directions.

### Objects of the invention

The primary object of the present invention is therefore to create a new type of fastening system suitable for fastening both ends of, for example, a fuel injection pump (or any other auxiliary unit) to/on an engine such as a vehicle engine which is also used for driving the pump/equipment item.

The fastening system also has to be of simple construction and make it possible for the auxiliary equipment item concerned to be quickly removed from and fitted to the engine. When a previously removed auxiliary equipment item is refitted or is replaced by another of the same type, it has to be possible for any play arising in the respective positional error compensating fastening arrangement in the system to be eliminated by simple and rapid adjustment of the main components of the fastening arrangement.

The new fastening system has also to be suitable for fastening auxiliary equipment to both vee-engines and in-line engines. On a vee-engine it has to be possible to fasten auxiliary equipment on top of the engine, in the vee, by means of two identical fastening arrangemencs which belong to the system and are placed on mutually opposite sides of the auxiliary equipment item. In an in-line engine it has to be possible for the positional error compensating end-fastening of the equipment item to be fitted to the side of the engine/engine block and to include only one fastening arrangement placed centrally under the relevant end of the equipment item.

The invention will also make it possible to compensate for positional error in both an axial direction and a radial direction as viewed in relation to a fixing screw or corresponding fastening device which forms part of the system.

### Description of the invention

The above objects are achieved according to the invention by the fastening arrangement having the features indicated in claim 1.

One of the characteristics of the fastening arrangement is that it includes a pair of conical bushes, the conical surfaces of which cooperate, and the outer bush is slit in the longitudinal direction, has a cylindrical outer surface, and surrounds the inner bush, which has a fixing screw running through it. This fixing screw is axially tight enable against the inner bush either by the head of the fastening screw abutting against an end surface of the inner bush or by the threaded engagement of the threaded shank of the fixing screw with a threaded hole in the inner bush. Either of the two main components (the fixing screw and the pair of bushes) of the fastening arrangement is thereby fixed in a fastening hole in the engine block (or in an element firmly attached to the latter) while the other main component is fixed in a fastening hole in a supporting bracket for the auxiliary equipment item or in a bush-shaped fastening element of the auxiliary equipment item.

Tightening the fixing screw makes the force exerted by the inner bush draw the outer bush outwards from the fastening hole until it abuts against the adjacent surface on the engine or the auxiliary equipment item. Further tightening of the fixing screw will then result in the pair of bushes being clamped in the fastening hole by expansion of the outer bush. As the outer bush is already bearing against the other fastening element, such further tightening will not subject the auxiliary equipment item to stressing by any axial force from the fixing screw which would otherwise occur because of the play which is assumed to exist between the auxiliary equipment item and the engine. Such play may for example be caused by the auxiliary equipment item and the engine being positioned relative to one another by another fastening at the other end of the auxiliary equipment item.

Particularly in cases where the auxiliary equipment item, e.g. a fuel injection pump, has to be fitted on top of the engine (which may be particularly relevant to vee-engines), it is advantageous for the fastening to take the form of two positional error compensating fastening arrangements which are placed on mutually opposite sides of the auxiliary equipment item. In this case the pair of bushes of each fastening arrangement include an inner bush which is screwably accommodated on the fixing screw, is conical outside and is accommodated for axial movement in a corresponding conical hollow space in the surrounding slit outer bush. The outer bush is cylindrical outside and is inserted in the corresponding fastening hole in a flange firmly fitted to the engine block. The inner bush and the flange are also provided with devices which prevent rotation of the inner bush in the fastening hole while the fixing screw is being tightened.

It is advantageous for the rotation preventing device to take the form of a locking pin which runs through the outer bush in the region of the latter's longitudinal slit.

If the fastening comprises two identical positional error compensating fastening arrangements placed on mutually opposite sides of the relevant auxiliary equipment item, it is advantageous for the fixing screw to be screwed into a threaded hole in the inner bush. In this case the end of the fixing screw which points away from the fastening hole which accommodates the pair of bushes has a screw head whereby the screw is tightenable against the end surface of the bush-shaped fastening element of the auxiliary equipment item through which the fixing screw runs with radial play. This means that tightening the head of the fixing screw against an end surface of the fastening element (with consequent force exerted by the inner bush) results in the bush being drawn slightly outwards from the fastening hole until the end surface of the outer bush which faces away from the fastening hole abuts against the adjacent other end of the fastening element.

In cases involving fastening the relevant auxiliary equipment item to the side of an engine, preferably an in-line engine, the auxiliary equipment fastening need only comprise one positional error compensating fastening arrangement. In this instance the pair of bushes includes an inner bush which is accommodated on the fastening screw with radial play relative to the shank of the screw, which is screwed into a threaded fastening hole in the engine block. In this case the externally conical inner bush is accommodated for axial movement in the corresponding conical hollow space in the surrounding slit outer bush. The externally cylindrical outer bush is inserted in the corresponding fastening hole in the supporting bracket for the auxiliary equipment item.

In this version, which is particularly suitable for in-line engines and comprises only one fastening arrangement at the relevant end of the auxiliary equipment item, it is advantageous for the inner bush to have no threads and to have running through it with radial play the shank of the fixing screw, which at its end pointing away from the engine block is provided with a head whereby the screw can be tightened to abut against the adjoining end surface of the inner bush. This makes it possible for the inner bush to be drawn into the surrounding outer bush, which means that the end surface of the latter which points away from the screw head can be moved to abut against an adjoining surface of the engine block and can thereafter (by expansion) have its cylindrical outside clamped in the fastening hole in the supporting bracket.

### Brief description of the drawings

The invention will now be described and explained further below with reference to the accompanying drawings which illustrate two embodiments of the invention, as follows:
- Fig.1: is a schematic side view of the first embodiment showing how a fuel injection pump can be fixed between the rows of cylinders in a vee-engine, which are set at a mutual angle;
- Fig.2: shows on a larger scale the position compensating fastening arrangement depicted in the circle A in Fig.1;
- Fig.3: shows on a still larger scale the region of the positional error compensating fastening arrangement according to the invention depicted in the circle B in Fig.2; and
- Fig.4: is a schematic cross-section of the second embodiment in the region of the positional error compensating fastening arrangement in an embodiment particularly suitable for fastening to an in-line engine.

### Description of embodiment examples

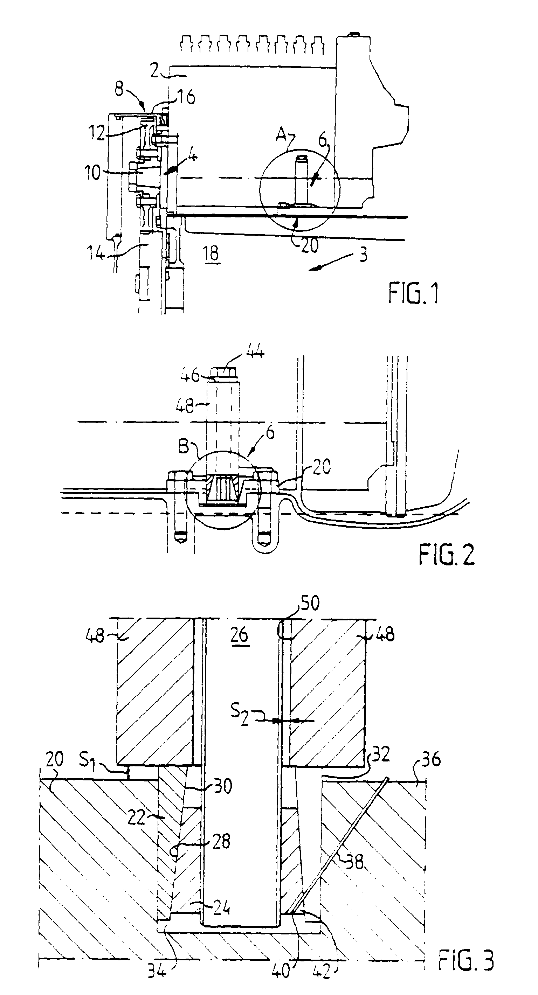

Fig.1 is a side view of a fuel injection pump 2 which is mounted in the "vee" on top of an eight-cylinder vee-engine 3 by means of a positional error compensating fastening system which includes a conventional flange mounting 4 at the front end of the pump and a pair of positional error compensating fastening arrangements 6 at the rear end of the pump. The figure shows only one of the two fastening arrangements 6, since the other is situated on the opposite side of the pump 2 and is therefore not visible in the figure. At the front end of the pump 2 there is a transmission 8 which drives the pump. This transmission includes a gearwheel 12 which is fixed to the pump shaft 10 and is driven by the crankshaft of the engine 3 via a gearwheel 14. The fuel injection pump 2 is flange-mounted in a transmission housing 16. The figure shows only one of the two rows of cylinders of the vee-engine 3, which are set at an angle and form part of the engine block 18. As may be seen in Figs. 2 and 3, the two fastening arrangements 6 are placed on a flange 20 which is firmly assembled to the engine block 18.

For further consideration of the two positional error compensating fastening arrangements 6 which form part of the fastening system, we now refer to Fig.2 and more particularly to Fig.3, which on a substantially larger scale shows the operative region of one of the two identical fastening arrangements 6.

Each fastening arrangement 6 includes in this embodiment not only a pair of mutually engaging conical bushes 22 and 24 but also a fixing screw 26 the threaded shank of which is screwed into a threaded central hole in the inner conical bush 24. The outer bush 22 is provided with a longitudinal slit which runs the whole axial length of the bush and makes it possible for the outer bush 22 to expand in a radial direction. The inner bush 24 has a conical outside 28 and the outer bush 22 has a corresponding conical inside 30, which means that the bushes are movable relative to one another in an axial direction while maintaining mutual surface contact. The outer bush 22 has a cylindrical outside 32 and is inserted in a cylindrical hole 34 in the flange 20 which is firmly mounted on the engine block 18. A locking pin 38 is inserted in a small oblique hole running from the top 36 of the flange 20 to the inside of the fastening hole 34, and the lower free end 40 of the locking pin 38 enters a recess 42 in the lower edge of the inner bush 24. It is advantageous for the pin 38 to run in through the outer bush 22 via the axial slit in the latter. By engaging with the recess 42 in the inner bush 24 the locking pin 38 prevents rotation of the bush 24 in the fastening hole 34.

The fixing screw 26, which is depicted with the lower portion of its threaded shank screwed into the inner bush 24, has at its upper end (see Fig.2) a head 44 whereby the screw is tightenable against the end surface 46 of the bush-shaped fastening element 48 of the pump 2, which is attached firmly to the pump housing. The pump 2 does of course have two such bush-shaped fastening elements 48 or "feet" situated on either side of the pump housing.

As a result of the two positional error compensating fastening arrangements 6 at the lower edge of the pump 2, the fastening system tolerates a certain incorrect positioning of the fastening holes 34 accommodated in the flange 20 relative to the theoretically totally correct positions for the holes with respect to the positions for the two fastening elements or feet 48 of the pump 2.

Such incorrect positioning of the fastening holes 34 relative to the fastening elements 48 of the pump 2 gives rise to positional error which the fastening arrangements 6 are therefore able to compensate. This is achieved in the following manner, see Fig.3.

Any play s₁ in the vertical direction, i.e. between the top 36 of the flange 20 and the underside of the respective fastening element 48, is accommodated by the fact that when the fixing screw 26 is tightened the outer bush 22 is drawn upwards/outwards by means of the inner bush 24 until it abuts against the underside of the fastening element 48 of the pump. The result is effective compensation of incorrect positioning in the vertical direction, i.e. the axial direction of the fixing screw 26. Further tightening of the fixing screw 26 clamps the outer bush 22 against the inside of the hole 34 as a result of the axial movement upwards in Fig.3 of the bush 24 caused by rotation of the screw 26. This movement causes widening and expansion of the slit outer bush 22, thereby clamping its cylindrical outside in the fastening hole 34. The two bushes 22, 24 are thus fixed relative to the flange 20 and hence also relative to the engine block 18. This means that the pump 2 is assembled firmly to the engine.

As tightening the fixing screw thus makes the fastening element 48 abut against an end surface on the outer bush 22 and the latter in its turn becomes clamped in the fastening hole 34, tightening the fixing screw makes the fastening element 48 become axially clamped against the outer bush 22. The result is compensation of the vertical play s₁ between the auxiliary equipment item and the engine. If this compensation had not taken place and the fixing screw was instead fitted in an ordinary threaded hole in the flange 20, tightening the fixing screw would have subjected the fastening element 48 and hence also the pump to disadvantageous clamping forces. The relevant play s₁ might for example have arisen after the front end of the pump 2 had in an inherently conventional manner been positioned and fastened to the transmission housing 16.

The hole 50 in the fastening element 48 in which the fixing screw 26 is placed is dimensioned with radial play s₂ relative to the fixing screw. This means that any positional deviation effect in the horizontal direction (the radial direction of the fixing screw) between the hole 50 and the fastening hole 34 can be eliminated by the fixing screw 26 being able to occupy a radially displaced position in the hole 50. This means per se that the fastening arrangement in the horizontal direction does not position the fastening element immovably relative to the engine block, but this is catered for otherwise, as will emerge from the ensuing description.

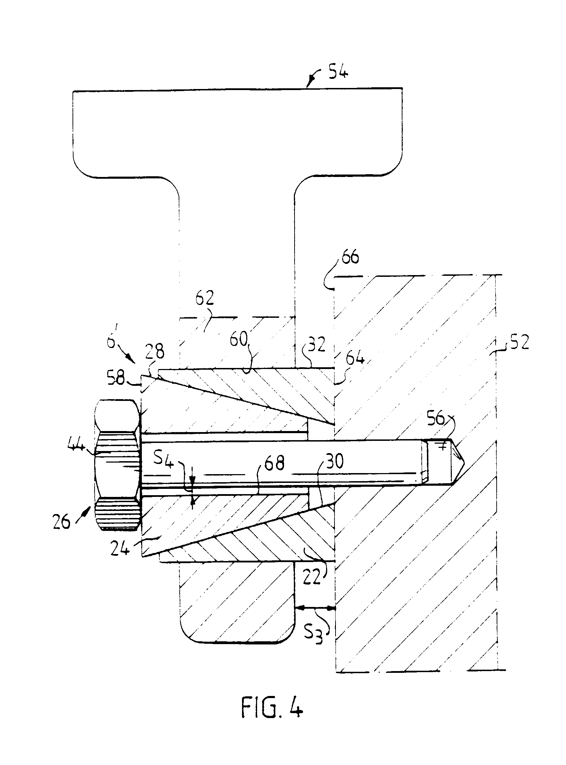

We now go on to consider a second embodiment of the positional error compensating fastening system according to the invention. This second embodiment, which is depicted schematically in Fig.4, is in this example intended for fastening an auxiliary equipment item such as a fuel injection pump 2 to the side of an in-line engine, the engine block of which is denoted by reference 52 in Fig.4. The portions of the embodiment shown in Fig.4 which directly correspond to those described above with reference to the embodiment according to Figs. 1-3 are denoted in Fig.4 by the same references as in Figs. 1-3. In this case the positional error compensating fastening system includes only one positional error compensating fastening arrangement, which is denoted by reference 6'. The reason why this version requires only one fastening arrangement 6' for the rear end of the injection pump 2 is that in this case this end can be supported by and mounted on a bracket 54 placed directly below the injection pump 2. The injection pump 2 can also, in this case likewise, have a conventional flange mounting at its front end, entirely in accordance with the flange mounting 4 shown in Fig.1.

In this case the fixing screw 26 is screwed into a threaded fastening hole 56 in the engine block 52. In this version the inner bush 24 has no threads in its central hole and is instead accommodated with radial play s₄ relative to the fixing screw 26. The fastening bushes 22 and 24 are likewise in this case in mutual contact via their respective conical surfaces 30 and 28. In this version the fixing screw 26 is actively applied to the inner bush 24 by means of its head 44 which abuts against the outer end surface 58 of the inner bush 24. The outer bush 22 with its axially slit wall has likewise in this version a cylindrical outside 32 and is inserted in a fastening hole 60 intended for the fastening arrangement 6' in the fastening portion 62 of the bracket 54 which points downwards parallel to the engine block 52. Screwing the fixing screw 26 into the fastening hole 56 presses the screw head 44 against the end surface 58 of the inner bush 24, thereby pushing the inner bush 24 into the surrounding outer bush 22, which is consequently pushed into the hole 60 until the end surface 64 of the bush abuts against the outside 66 of the engine block 52. Further screwing of the fixing screw 26 into the hole 56 makes the inner bush 24 thereafter cause only a radial widening or expansion of the outer bush 22, thereby clamping its cylindrical outside 32 in the fastening hole 60 in the fastening portion 62 of the bracket 54.

Any play s₃ between the fastening portion 62 of the bracket 54 and the outside 66 of the engine block 52 is thus absorbed by axial movement of the outer bush 22 until it abuts against the outside 66 of the engine block. Any play in a direction perpendicular to the shank of the fixing screw 26 can be accommodated owing to the radial play s₄ between the screw shank and the unthreaded hole 68 running through the inner bush 24.

The description so far has mainly covered a rear fastening, while supposing that there is also a front fastening. It is advantageous for this front fastening to be a flange fastening to the transmission housing and for it to include screwed or bolted connections which run in a horizontal direction perpendicular to the fixing screw 26 which forms part of the rear fastenings. The front fastening will thus ensure that the auxiliary equipment item is also positioned in the horizontal direction.

In an alternative embodiment the front fastening may include fixing screws which run in other directions, and positioning in the horizontal direction may be achieved by relevant fixing screws being positioned in their respective holes without play. As the front fastening may thus be regarded as constituting an ordinary screwed connection, further description of it here is dispensed with. What is important is that as well as having at one end the position compensating fastening according to the invention, the auxiliary equipment item may also have at its other end a fixed non position compensating fastening which is known per se.

## Claims

1. Positional error compensating fastening arrangement for fastening an auxiliary equipment item (2) to an internal combustion engine (18, 52) whereby the auxiliary equipment item or an element firmly attached to it (48, 54) constitutes a first fastening element and the engine (18, 52) or an element firmly attached to it (20) constitutes a second fastening element,
comprising a pair of bushes comprising an outer and an inner conical bush (22, 24) the conical surfaces of which engage with one another, the outer bush (22) of which has a cylindrical outer surface (32) and is slit along its length, and by a fixing screw (26) which runs through the inner bush (24) and may be applied axially to the inner bush (24), whereby the pair of bushes (22, 24) are fastened in a fastening hole (34,60) in one of the fastening elements (20, 54), while the fixing screw is fastened in a fastening hole (50,56) in the other fastening element (48, 52) the outer bush (22) being accommodated by its said outer surface for axial movement in the fastening hole (34,60) accommodating the bushes upon tightening of the fixing screw (26) resulting from the force exerted by the inner bush (24) which pushes the outer bush (22) slightly outwards from the fastening hole (34,60) accommodating the bushes until the end surface (64) of the outer bush (22) which faces away from the fastening hole (34,60) accommodating the bushes abuts against an adjacent surface (66) of the other fastening element (48, 52) accommodating the fixing screw thereby eliminating axial play (s₁, s₃) between the fastening elements before the fixing screw is further tightened and the outer bush (22) is expanded to be clamped in the fastening hole (34,60) accommodating the bushes, and
the fixing screw (26) being accommodated with radial play (s2, s4) in either the other fastening element (48) or the inner bush (24) to compensate for radially incorrect positioned fastening holes in the fastening elements.

2. Fastening arrangement according to claim 1,
**characterised** in that the inner bush (24) is screwably connected to the fixing screw (26), has a conical outside, is accommodated for axial movement in a corresponding conical hollow space (30) in the sur-rounding slit outer bush (22), which is inserted in the pertinent fastening hole (34) in a flange (20) assembled firmly to the engine, and that the inner bush (24) and the flange are provided with devices (42, 38) which prevent rotation of the inner bush (24) in the fastening hole (34).

3. Fastening arrangement according to claim 2,
**characterised** in that the rotation preventing devices consist of a recess (42) in the inner bush (24) and a locking pin (38) which engages with that recess, is anchored in the flange (20) and projects into the fastening hole (34) and into the recess (42) in the inner bush.

4. Fastening arrangement according to claim 2 or 3,
**characterised** in that the fixing screw (26) which is screwed into a threaded hole in the inner bush (24) has, at its end which points away from the fastening hole (34) which accommodates the pair of bushes, a head (44) whereby the fixing screw can be tightened against an end surface (46) of a bush-shaped fastening element (48) of the auxiliary equipment item (2) through which the fixing screw (26) runs with radial play (s₂), and that tightening of the fixing screw against the end surface (46) of the fastening element (48) and the consequent force exerted by the inner bush (24) can push the outer bush (22) slightly outwards from the fastening hole (34) until the end surface of the outer bush (22) which faces away from the fastening hole abuts against an adjoining other end surface of the fastening element (48).

5. Fastening arrangement according to claim 1,
**characterised** in that the pair of bushes (22, 24) include the inner bush (24) which is accommodated with radial play (s₄) on the fixing screw (26) screwed into a threaded fastening hole (56) in the engine (52), has a conical outside and is accommodated for axial movement in a corresponding conical hollow space (30) in the surrounding slit outer bush (22), which is inserted in the pertinent fastening hole (60) for the auxiliary equipment item (2).

6. Fastening arrangement according to claim 5,
**characterised** in that the fixing screw (26), which with radial play (s₄) runs through the unthreaded hole (68) in the inner bush (24), has at its end pointing away from the engine a head (44) whereby the fixing screw (26) can be tightened to abut against the adjoining end surface (58) of the inner bush (24) which can thus be pushed into the surrounding outer bush (22), the end surface (64) of which pointing away from the screw head (44) can thus be moved to abut against an adjoining surface (66) of the engine, after which the outer bush (22) can, by expansion of its cylindrical outer surface (32), be clamped in a fastening hole (60) in a supporting bracket (54) pertaining to the auxiliary equipment item (2).

7. Fastening arrangement according to any one of claims 1-4,
**characterised** in that the fastening of the auxiliary equipment (2) includes two identical fastening arrangements (6) placed on mutually opposite sides of the rear end of the auxiliary equipment item.

8. Fastening arrangement according to any one of claims 5-6,
**characterised** in that the fastening of the auxiliary equipment item (2) includes at the rear end of the auxiliary equipment item a positional error compensating fastening arrangement (6') which is inserted in the pertinent fastening hole (60) situated in the supporting bracket (54) for the auxiliary equipment item (2).

## Patentansprüche

1. Befestigungsanordnung mit Lagefehlerkompensation zum Befestigen eines Hilfsaggregates (2) an einem Verbrennungsmotor (18, 52), bei der das Hilfsaggregat oder ein daran fest angebrachtes Bauteil (48, 54) ein erstes Befestigungselement bildet und der Motor (18, 52) oder ein daran fest angebrachtes Bauteil (20) ein zweites Befestigungselement bildet, mit einem Buchsenpaar, das eine äußere und eine innere konische Buchse (22, 24), deren konische Oberflächen miteinander in Eingriff stehen, von denen die äußere Buchse (22) eine zylindrische äußere Oberfläche (32) hat und längsgeschlitzt ist, sowie eine Befestigungsschraube (26) aufweist, die sich durch die innere Buchse (24) erstreckt und axial an die innere Buchse (24) angelegt werden kann, wodurch das Buchsenpaar (22, 24) in einem Befestigungsloch (34, 60) in einem der Befestigungselemente (20, 54) befestigt wird, während die Befestigungsschraube in einem Befestigungsloch (50, 56) in dem anderen Befestigungselement (48, 52) befestigt wird, wobei beim Festziehen der Befestigungsschraube (26) die äußere Buchse (22) durch ihre genannte äußere Oberfläche zur axialen Bewegung in dem die Buchsen aufnehmenden Befestigungsloch (34, 60) aufgenommen ist, aufgrund der durch die innere Buchse (24) ausgeübten Kraft, die die äußere Buchse (22) leicht aus dem die Buchsen aufnehmenden Befestigungsloch (34, 60) herausdrückt, bis die Stirnfläche (64) der äußeren Buchse, die von dem die Buchsen aufnehmenden Befestigungsloch (34, 60) abgewandt ist, gegen eine angrenzende Oberfläche (66) des die Befestigungsschraube aufnehmenden, anderen Befestigungselements (48, 52) stößt, wodurch axiales Spiel (s₁, s₃) zwischen den Befestigungselementen beseitigt wird, bevor die Befestigungsschraube weiter festgezogen und die äußere Buchse (22) expandiert wird, um in dem die Buchsen aufnehmenden Befestigungsloch (35, 60) festgeklemmt zu werden, und wobei die Befestigungsschraube (26) mit radialem Spiel (s₂, s₄) entweder in dem anderen Befestigungselement (48) oder der inneren Buchse (24) aufgenommen ist, um einen Ausgleich für radial falsch positionierte Befestigungslöcher in den Befestigungselementen zu schaffen.

2. Befestigungsanordnung nach Anspruch 1,
dadurch gekennzeichnet, daß die innere Buchse (24) schraubbar mit der Befestigungsschraube (26) verbunden ist, eine konische Außenseite hat, zur axialen Bewegung in einem entsprechenden, konischen Hohlraum (30) in der umgebenden, geschlitzten äußeren Buchse (22) aufgenommen ist, die in das passende Befestigungsloch (34) in einem Flansch (20) eingefügt ist, der fest mit dem Motor verbunden ist, und daß die innere Buchse (24) und der Flansch mit Einrichtungen (42, 38) versehen sind, die eine Drehung der inneren Buchse (24) in dem Befestigungsloch (34) verhindern.

3. Befestigungsanordnung nach Anspruch 2,
dadurch gekennzeichnet, daß die die Drehung verhindernden Einrichtungen aus einer Ausnehmung (42) in der inneren Buchse (24) und einem Arretierstift (38) bestehen, der mit der Ausnehmung in Eingriff ist, in dem Flansch (20) festgelegt ist und in das Befestigungsloch (34) und die Ausnehmung (42) in der inneren Buchse ragt.

4. Befestigungsanordnung nach Anspruch 2 oder 3,
dadurch gekennzeichnet, daß die Befestigungsschraube (26), die in ein Gewindeloch in der inneren Buchse (24) geschraubt ist, an ihrem von dem das Buchsenpaar aufnehmenden Befestigungsloch (34) wegweisenden Ende einen Kopf (44) hat, mit dem die Befestigungsschraube gegen eine Stirnfläche (46) eines buchsenförmigen Befestigungselements (48) des Hilfsaggregates (2) festgezogen werden kann, durch das die Befestigungsschraube (26) sich mit radialem Spiel (s₂) erstreckt, und daß ein Festziehen der Befestigungsschraube gegen die Stirnfläche (46) des Befestigungselements (48) und die resultierende, von der inneren Buchse (24) ausgeübte Kraft die äußere Buchse (22) leicht aus dem Befestigungsloch (34) herausdrücken kann, bis die Stirnfläche der äußeren Buchse (22), die von dem Befestigungsloch abgewandt ist, gegen eine angrenzende, andere Stirnfläche des Befestigungselements (48) stößt.

5. Befestigungsanordnung nach Anspruch 1,
dadurch gekennzeichnet, daß das Buchsenpaar (22, 24) die innere Buchse (24) einschließt, die mit radialem Spiel (s₄) auf der Befestigungsschraube (26) aufgenommen ist, die in ein Befestigungsloch (56) mit Gewinde in dem Motor (52) geschraubt ist, eine konische Außenseite hat und zur axialen Bewegung in einem entsprechenden, konischen Hohlraum (30) in der umgebenden, geschlitzten äußeren Buchse (22) aufgenommen ist, die in das passende Befestigungsloch (60) für das Hilfsaggregat (2) eingefügt ist.

6. Befestigungsanordnung nach Anspruch 5,
dadurch gekennzeichnet, daß die Befestigungsschraube (26), die sich mit radialem Spiel (s₄) durch das gewindelose Loch (68) in der inneren Buchse (24) erstreckt, an ihrem von dem Motor wegweisenden Ende einen Kopf (44) hat, mit dem die Befestigungsschraube (26) festgezogen werden kann, um gegen die angrenzende Stirnfläche (58) der inneren Buchse (24) zu stoßen, die dadurch in die umgebende äußere Buchse (22) gedrückt werden kann, deren von dem Schraubenkopf (44) wegweisende Stirnfläche (64) somit in Berührung mit einer angrenzenden Fläche (66) des Motors bewegt werden kann, wonach die äußere Buchse (22) durch Expansion ihrer zylindrischen äußeren Oberfläche (32) in ein Befestigungsloch (60) eines dem Hilfsaggregat (2) zugehörigen Trägers (54) geklemmt werden kann.

7. Befestigungsanordnung nach einem der Ansprüche 1 bis 4,
dadurch gekennzeichnet, daß die Befestigung des Hilfsaggregats (2) zwei identische Befestigungsanordnungen (6) umfaßt, die auf einander gegenüberliegenden Seiten des rückwärtigen Endes des Hilfsaggregats angeordnet sind.

8. Befestigungsanordnung nach einem der Ansprüche 5 bis 6,
dadurch gekennzeichnet, daß die Befestigung des Hilfsaggregats (2) an dem rückwärtigen Ende des Hilfsaggregats eine Befestigungsanordnung (6') mit Lagefehlerkompensation umfaßt, die in das passende Befestigungsloch (60) eingefügt ist, welches sich in dem Träger (54) für das Hilfsaggregat (2) befindet.

## Revendications

1. Système de fixation à compensation d'erreur de positionnement, servant à fixer un élément d'équipement auxiliaire (2) à un moteur à combustion interne (18, 52), l'élément d'équipement auxiliaire, ou un élément (48, 54) fixé rigidement à ce dernier, constituant un premier élément de fixation et le moteur(18,52), ou un élément (20) fixé rigidement à ce dernier, constituant un deuxième élément de fixation,
comprenant un couple de douilles comportant une douille conique extérieure et une douille conique intérieure (22, 24), dont les surfaces coniques sont en contact l'une avec l'autre, douilles parmi lesquelles la douille extérieure (22) présente une surface extérieure cylindrique (32) et est fendue sur sa longueur, et une vis de blocage (26) qui traverse la douille intérieure (24) et peut être appliquée axialement sur la douille intérieure (24), de manière que le couple de douilles (22, 24) soit fixé dans un trou de fixation (34,60) ménagé dans l'un des éléments de fixation (20, 54), tandis que la vis de blocage est fixée dans un trou de fixation (50, 56) ménagé dans l'autre élément de fixation (48, 52), la douille extérieure (22) étant logée, par sa dite surface extérieure, avec une possibilité de déplacement axial, dans le trou de fixation (34, 60) logeant les douilles, lors du serrage de la vis de blocage (26) résultant de la force exercée par la douille intérieure (24) qui pousse la douille extérieure (22) légèrement vers l'extérieur depuis le trou de fixation (34, 60) logeant les douilles, jusqu'à ce que la surface d'extrémité (64) de la douille extérieure (22), qui est tournée à l'opposé du trou de fixation (34, 60) logeant les douilles, vienne en butée contre une surface adjacente (66) de l'autre élément de fixation (48, 52) logeant la vis de blocage, ce qui élimine tout jeu axial (s₁, s₃) entre les éléments de fixation avant que la vis de blocage soit davantage serrée et que la douille extérieure (22) soit dilatée afin d'être serrée dans le trou de fixation (34, 60) logeant les douilles, et
la vis de blocage (26) étant reçue, avec un jeu radial (s₂, s₄), soit dans l'autre élément de fixation (48), soit dans la douille intérieure (24), afin de compenser des trous de fixation positionnés radialement de façon incorrecte dans les éléments de fixation.

2. Système de fixation selon la revendication 1, caractérisé en ce que la douille intérieure (24) est reliée par vissage à la vis de blocage (26), présente une partie extérieure conique, est logée avec une possibilité de déplacement axial dans un espace creux conique (30) correspondant ménagé dans la douille extérieure (22) fendue placée autour, qui est insérée dans le trou de fixation (34) correspondant ménagé dans une bride (20) assemblée rigidement au moteur, et en ce que la douille intérieure (24) et la bride sont pourvues de dispositifs (42, 38) qui empêchent toute rotation de la douille intérieure (24) dans le trou de fixation (34).

3. Système de fixation selon la revendication 2, caractérisé en ce que les dispositifs empêchant une rotation consistent en une cavité (42) ménagée dans la douille intérieure (24) et un doigt de verrouillage (38) qui vient en prise dans cette cavité, est ancré dans la bride (20) et fait saillie dans le trou de fixation (34) et dans la cavité (42) ménagée dans la douille intérieure.

4. Système de fixation selon la revendication 2 ou 3, caractérisé en ce que la vis de blocage (26), qui est vissée dans un trou taraudé ménagé dans la douille intérieure (24), présente, à son extrémité qui pointe à l'opposé du trou de fixation (34) qui loge le couple de douilles, une tête (44) de manière que la vis de blocage puisse être serrée contre une surface d'extrémité (46) d'un élément de fixation (48), en forme de douille, de l'élément d'équipement auxiliaire (2), à travers lequel la vis de blocage (26) s'étend avec un jeu radial (s₂), et en ce que le serrage de la vis de blocage contre la surface d'extrémité (46) de l'élément de fixation (48) et la force consécutive exercée par la douille intérieure (24) peuvent pousser la douille extérieure (22) légèrement vers l'extérieur du trou de fixation (34), jusqu'à ce que la surface d'extrémité de la douille extérieure (22), qui est tournée à l'opposé du trou de fixation, vienne en butée contre une autre surface d'extrémité adjacente de l'élément de fixation (48).

5. Système de fixation selon la revendication 1, caractérisé en ce que le couple de douilles (22, 24) comprend la douille intérieure (24) qui est reçue avec un jeu radial (s₄) sur la vis de blocage (26) vissée dans un trou de fixation taraudé (56) ménagé dans le moteur (52), présente une surface extérieure conique et est logée avec une possibilité de déplacement axial dans un espace creux conique correspondant (30), ménagé dans la douille extérieure fendue (22) placée autour, qui est insérée dans le trou de fixation (60) approprié pour l'élément d'équipement auxiliaire (2).

6. Système de fixation selon la revendication 5, caractérisé en ce que la vis de blocage (26), qui traverse avec un jeu radial (s₄) le trou non taraudé (68) ménagé dans la douille intérieure (24), présente, à son extrémité orientée à l'opposé du moteur, une tête (44) de manière que la vis de blocage (26) puisse être serrée de façon à venir en butée contre la surface d'extrémité adjacente (58) de la douille intérieure (24), qui peut ainsi être poussée dans la douille extérieure (22) placée autour, dont la surface d'extrémité (64) orientée à l'opposé de la tête de vis (44) peut ainsi être déplacée afin de venir en butée contre une surface adjacente (66) du moteur, à la suite de quoi la douille extérieure (22) peut, par une expansion de sa surface extérieure cylindrique (32), être serrée dans un trou de fixation (60) ménagé dans un support (54) associé à l'élément d'équipement auxiliaire (2).

7. Système de fixation selon l'une quelconque des revendications 1 à 4, caractérisé en ce que la fixation de l'équipement auxiliaire (2) comprend deux systèmes de fixation (6) identiques, placés sur des côtés mutuellement opposés de l'extrémité arrière de l'élément d'équipement auxiliaire.

8. Système de fixation selon l'une quelconque des revendications 5 et 6, caractérisé en ce que la fixation de l'élément d'équipement auxiliaire (2) comprend, au niveau de l'extrémité arrière de l'élément d'équipement auxiliaire, un système de fixation à compensation d'erreur de positionnement(6'), qui est inséré dans le trou de fixation correspondant (60) ménagé dans le support (54) pour l'élément d'équipement auxiliaire (2).
